(19) Europäisches Patentamt
European Patent Office
Office européen des brevets

(11) **EP 3 871 482 B1**

(12) **EUROPÄISCHE PATENTSCHRIFT**

(45) Veröffentlichungstag und Bekanntmachung des Hinweises auf die Patenterteilung:
**05.11.2025  Patentblatt 2025/45**

(21) Anmeldenummer: **21152518.3**

(22) Anmeldetag: **20.01.2021**

(51) Internationale Patentklassifikation (IPC):
**A01B 71/02** (2006.01)    A01B 71/08 (2006.01)

(52) Gemeinsame Patentklassifikation (CPC):
**A01B 71/02;** A01B 71/08

(54) **VERFAHREN ZUR AUTOMATISIERUNG EINER LANDWIRTSCHAFTLICHEN ARBEITSAUFGABE**

METHOD FOR AUTOMATING AN AGRICULTURAL TASK

PROCÉDÉ D'AUTOMATISATION D'UNE TÂCHE DE TRAVAIL AGRICOLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.02.2020  DE 102020202396**

(43) Veröffentlichungstag der Anmeldung:
**01.09.2021  Patentblatt 2021/35**

(73) Patentinhaber: **Deere & Company
Moline, IL 61265 (US)**

(72) Erfinder: **SCHMIDT, Martin
68163 Mannheim (DE)**

(74) Vertreter: **Dehnhardt, Florian Christopher
John Deere GmbH & Co. KG
Global Intellectual Property Services
John-Deere-Straße 70
68163 Mannheim (DE)**

(56) Entgegenhaltungen:
**EP-A2- 3 243 368       US-A1- 2015 296 701
US-A1- 2019 008 088**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Automatisierung einer landwirtschaftlichen Arbeitsaufgabe, die von einem Bodenbearbeitungsgerät an einem landwirtschaftlichen Traktor ausgeführt wird.

Die Methode der adaptiven und teilflächenspezifischen Bodenbearbeitung gewinnt im Zuge der Einführung der Präzisionslandwirtschaft zunehmend an Bedeutung. Treibende Faktoren sind Bearbeitungseffizienz und Bearbeitungsqualität, wobei sich die Bearbeitungseffizienz letztlich aus den Prozesskosten, also Treibstoffverbrauch, Maschinenlebensdauer, Lohnkosten und möglichen Mietkosten, sowie erzieltem landwirtschaftlichen Nutzen ergibt. Diese Faktoren stehen dabei in einem bei der Arbeitsplanung zu berücksichtigenden Spannungsverhältnis. Üblicherweise erfolgt die Arbeitsplanung auf Grundlage von Applikationskarten, die auf Ertragsabschätzungen, Erfahrungswerten oder Daten vorhergehender Drohnen- oder Satellitenüberflüge beruhen. Erfolgt die Bodenbearbeitung insbesondere mittels eines Bodenbearbeitungsgeräts zur Grundboden- oder Saatbettbearbeitung, also eines Grubbers, einer Kreiselegge, einer Scheibenegge oder eines Pflugs, so wird ausgehend von den erstellten Applikationskarten eine während der Feldbearbeitung jeweils einzuhaltende teilflächenspezifische Bearbeitungsgeschwindigkeit und/oder Arbeitstiefe abgeleitet. Diese wird durch entsprechende Eingriffe in eine Motorsteuerung eines landwirtschaftlichen Traktors bzw. durch geeignete Veränderung der Hublage eines Dreipunkt-Krafthebers an dem landwirtschaftlichen Traktor eingestellt, an dem das Bodenbearbeitungsgerät angebracht ist. Im Falle einer Kreiselegge kommt gegebenenfalls noch eine Steuerung der Drehzahl angetriebener Kreiseln hinzu. Eine weitergehende Optimierung des Bearbeitungsvorgangs unter Einbeziehung schwer abschätzbarer situativer oder lokaler Einflüsse erfolgt dabei meist nicht. Hierzu gehören wetterbedingte Einflüsse, die Verteilung und Massedichte verbliebener Ernsteste, nachfolgend geplante Bearbeitungsschritte, und dergleichen. Letztere haben aber maßgeblichen Einfluss auf die Bearbeitungsqualität.

Die Schriften EP 3 243 368 A2, US 2015/296701 A1 und US 2019/008088 A1 beschreiben bekannte Verfahren zur Automatisierung einer landwirtschaftlichen Arbeitsaufgabe.

Es ist daher Aufgabe der vorliegenden Erfindung, ein hinsichtlich erzielbarer Bearbeitungseffizienz und Bearbeitungsqualität verbessertes Verfahren der eingangs genannten Art anzugeben.

Diese Aufgabe wird durch ein Verfahren mit den Merkmalen des Patentanspruchs 1 gelöst.

Das an einen kaskadierten Regelkreis angelehnte Verfahren ist hierbei aufgrund der ins Optimierungsmodul zurückgeführten Feedbackdaten iterativ und damit bezüglich der erzielbaren Bearbeitungseffizienz und -qualität selbstoptimierend ausgelegt. Die einzelnen Module können hierbei in der Kontrolleinheit funktionsmäßig als entsprechende Software hinterlegt sein. Eine Verwendung des erfindungsgemäßen Verfahrens bietet sich insbesondere im Zusammenhang mit Bodenbearbeitungsgeräten zur Grundboden- oder Saatbettbearbeitung, wie eines Grubbers, einer Kreiselegge, einer Scheibenegge oder eines Pflugs , an. Diese dienen der Vorbereitung der Feldoberfläche für einen nachfolgenden Pflanz- oder Sävorgang.

Vorteilhafte Ausgestaltungen des erfindungsgemäßem Verfahrens gehen aus den Unteransprüchen hervor.

Vorzugsweise werden die teilflächenspezifischen Zielwerte und/oder Wichtungsfaktoren im Rahmen einer Arbeitsvorbereitung bzw. -planung vorgegeben und in eine der Kontrolleinheit zugeordnete Speichereinheit bzw. eine Datencloud hochgeladen, sodass diese von dort beim Durchlaufen des Regelkreises vom Interfacemodul abrufbar sind. Die Durchführung der Arbeitsvorbereitung bzw. -planung erfolgt typischerweise seitens eines Bedieners über eine in dem landwirtschaftlichen Traktor vorgesehene Nutzerschnittstelle bzw. über ein zentrales Farmmanagementsystem, das insbesondere Zugriff auf eine agronomische Datenbank hat, die unter anderem Informationen hinsichtlich Verlauf, Höhenprofil und Abmessungen der zu bearbeitenden Feldoberfläche, Bodeneigenschaften, zurückliegender Bewirtschaftungshistorie, zukünftiger Bewirtschaftungsplanung einschließlich nachfolgend geplanter Bearbeitungsschritte, technischer Spezifikationen des eingesetzten Bodenbearbeitungsgeräts sowie zeitaktueller Angaben äußerer Einflussfaktoren wie der (zurückliegenden, aktuellen oder voraussichtlich zu erwartenden) Wetterverhältnisse und dergleichen enthält.

Hierbei besteht die Möglichkeit, dass die prozessbezogenen und/oder agronomischen Gütekriterien insbesondere eine Flächenleistung, Prozesskosten und/oder eine mittels des Bodenbearbeitungsgeräts erzeugbare agronomische Arbeitsqualität betreffen. Die Prozesskosten decken dabei idealerweise den im Hinblick auf die Durchführung der Arbeitsaufgabe insgesamt anfallenden finanziellen Einsatz ab, insbesondere Treibstoff- und laufende Betriebskosten einschließlich der sich aus der Lebensdauer der verwendeten Maschinen ergebenden Investitionskosten, Lohnkosten sowie möglichen Mietkosten jeweils pro zu bearbeitender Flächeneinheit.

Die im Zuge der Arbeitsvorbereitung bzw. -planung über das Interfacemodul initial vorgegebenen teilflächenspezifischen Zielwerte und/oder Wichtungsfaktoren beruhen hierbei auf heuristischen Annahmen in Bezug auf die tatsächlichen Prozesskosten. Die heuristischen Annahmen gehen dabei von den voraussichtlich zu erwartenden Mindest-Prozesskosten aus, wohingegen die Zielwerte der agronomischen Arbeitsqualität bzw. die diese repräsentierenden Qualitätskriterien möglichst realistisch angesetzt werden. Erstere bilden lediglich einen Startpunkt für den nachfolgend ausgeführten iterativen Selbstoptimierungsprozess.

Auf Ebene des Optimierungsmoduls werden die aus dem Interfacemodul stammenden teilflächenspezifischen Zielwerte und/oder Wichtungen nach Maßgabe der Feedbackdaten modifiziert. Die Beurteilung des durch diese repräsentierten Zustands der Feldoberfläche vor bzw. nach der Bearbeitung mittels des Bodenbearbeitungsgeräts kann hierbei unter Nutzung von bildgebenden Sensormitteln erfolgen, die die Feldoberfläche vor dem landwirtschaftlichen Traktor (vorausschauende Sensormittel) bzw. hinter dem Bodenbearbeitungsgerät (zurückschauende Sensormittel) optisch erfassen. Bei den bildgebenden Sensormitteln handelt es sich beispielsweise um eine oder mehrere Mono- und/oder Stereo-Kameras, die im sichtbaren oder IR-Wellenlängenbereich arbeiten. Zur Verbesserung der Datenqualität ist eine Kombination mit weiteren Sensormitteln, wie einem Bodenradar (Ground Penetrating Radar) und/oder einem LiDAR denkbar.

Die vorausschauenden Sensormittel sind bevorzugt im vorderen Dachbereich einer Fahrerkabine des landwirtschaftlichen Traktors angebracht, sodass diese einer bei der Bodenbearbeitung verursachten Staubentwicklung in möglichst geringem Maße ausgesetzt sind. Denkbar ist jedoch auch eine Anbringung im Frontbereich einer Motorhaube oder an einem Frontgewicht. Die zurückschauenden Sensormittel hingegen sind dem Bodenbearbeitungsgerät zugeordnet und dort an einer tragenden Gerätestruktur rückwärtig befestigt. Ferner ist auch eine Anbringung im hinteren Dachbereich der Fahrerkabine möglich.

Um eine bessere Vorstellung von der Natur der Feedbackdaten zu erhalten, sollen diese nachfolgend am Beispiel eines abgeernteten Getreide- bzw. Maisfelds veranschaulicht werden.

So können die mittels der vorausschauenden Sensormittel bereitgestellten Feedbackdaten für den Fall eines abgeernteten Getreidefelds Zustandsparameter wie die Stoppeldichte (also die Anzahl der Getreidestoppeln pro Flächeneinheit), die Höhe bzw. Länge der Stoppeln und/oder der Strohreste, Verteilung bzw. Massedichte einer aufliegenden Strohmatte, Unkrautbesatz, den Grad einer Bodenverdichtung und den Verlauf der Stoppelreihen in Bezug auf die Bearbeitungsrichtung betreffen. Handelt es sich um ein (mittels eines Feldhäckslers) abgeerntetes Maisfeld, ist insbesondere auch der Zustand der Stoppeln von Belang, nämlich für den Fall, dass diese während des Erntevorgangs zur Bekämpfung des Maiswurzelbohrers mittels des Feldhäckslers aufgespleißt bzw. plattgefahren worden sind. Die vorstehend aufgeführten Parameter sollen lediglich einen Überblick über die zur Modifikation der Prozessführungsgrößen herangezogenen Feedbackdaten geben, daneben ist auch eine Vielzahl weiterer bzw. anderer Zustandsparameter vorstellbar. Die Analyse bzw. Bildverarbeitung der von den Sensormitteln gelieferten Rohdaten kann hierbei unter Nutzung eines mittels eines Deep-Learning-Ansatzes konditionierten Bildverarbeitungssystems erfolgen.

Entsprechendes kann auch für die mittels der zurückschauenden Sensormittel gewonnenen Feedbackdaten gelten. Diese können sich für den Fall eines abgeernteten Getreidefelds auf Zustandsparameter wie den Einarbeitungsgrad der Getreidereste bzw. den verbliebenen Strohbedeckungsgrad, die Krümelung der Feldoberfläche, den Tiefenlockerungsgrad oder den Einarbeitungsgrad von Unkraut beziehen. Im Falle eines abgeernteten Maisfelds können neben dem Einarbeitungsgrad der Maisstoppeln bzw. der Pflanzenüberreste im Allgemeinen Zustandsparameter wie der Zerkleinerungsgrad der Maisstoppeln hinzukommen.

Des Weiteren ist eine Modifikation der Prozessführungsgrößen in Abhängigkeit eines Betriebszustands des Bodenbearbeitungsgeräts und/oder des landwirtschaftlichen Traktors vorgesehen. Dieser leitet sich beispielsweise aus Informationen eines aktuellen Treibstoffverbrauchs des landwirtschaftlichen Traktors, einer sich aus dessen Fahrtgeschwindigkeit ergebenden aktuellen Bearbeitungsgeschwindigkeit und/oder einer sensorisch erfassten Arbeitstiefe (Bodeneingriffstiefe) des Bodenbearbeitungsgeräts ab. Die betreffenden Informationen stehen typischerweise an einem CAN-Bus oder ISOBUS des landwirtschaftlichen Traktors zur Verfügung.

Auch können in die Feedbackdaten Informationen hinsichtlich eines aktuellen Funktionsstatus des Bodenbearbeitungsgeräts eingehen. Der aktuelle Funktionsstatus kann durch Verwendung von kamerabasierten Detektormitteln am Bodenbearbeitungsgerät bzw. dessen tragender Gerätestruktur überwacht werden, wobei diese auf Grundlage einer entsprechenden Bildverarbeitung bzw. -analyse erkennen, ob sich Ernteeste in den Werkzeugen des Bodenbearbeitungsgeräts (beispielsweise den Zinken eines Grubbers) angesammelt haben und zu möglichen Störungen des Bearbeitungsvorgangs führen können. Ferner ist bei der Bewertung des aktuellen Funktionsstatus eine Berücksichtigung des aktuellen Materialflusses, also des Durchsatzes von Ernteeresten und Ackererde pro Zeiteinheit möglich.

Zum Zwecke der (Selbst-) Optimierung der erzielbaren Bearbeitungseffizienz und -qualität ist erfindungsgemäß vorgesehen, dass von der Kontrolleinheit zur Modifikation der Prozessführungsgrößen ein Kostenfunktional berechnet und innerhalb vorgegebener Grenzen der agronomischen Gütekriterien minimiert wird.

Bei dem Kostenfunktional kann es sich um einen Zusammenhang der Gestalt

$$J_{gesamt} = \lambda_1 \cdot J_{Kraftstoff} + \lambda_2 \cdot J_{Betrieb} + \sum_{k=0}^{M} l(\epsilon_k(t_q), t_q)_{Arbeitsqualität}$$

handeln, wobei die Größe $J_{Kraftstoff}$ die Treibstoffkosten und die Größe $J_{Betrieb}$ die laufenden Betriebskosten wiedergibt.

Die beiden Größen $J_{Kraftstoff}$ und $J_{Betrieb}$ ergeben sich dabei initial aus den über das Interfacemodul vorgegebenen teilflächenspezifischen Zielwerten in Bezug auf die Prozesskosten, wobei diese im Rahmen der durchgeführten Selbstoptimierung entsprechend angepasst werden. Der Anteil

$$\sum_{k=0}^{M} l(\epsilon_k(t_q), t_q)_{Arbeitsqualität}$$

entspricht dabei einer Ungleichnebenbedingung zur Einhaltung der teilflächenspezifischen Zielwerte für die agronomische Arbeitsqualität bzw. die diese repräsentierenden Gütekriterien. $\varepsilon_k$ repräsentiert hierbei einen mittels der vorausschauenden bzw. zurückschauenden Sensormittel gewonnenen Zustandsparameter und $l(\epsilon_k(t_q), t_q)$ einen Bestrafungsterm, der die Kosten bei Verletzung einer jeweils einzuhaltenden agronomischen Nebenbedingungen $\varepsilon_{k,min} \leq \varepsilon_k \leq \varepsilon_{k,max}$ modelliert. Die Summation erfolgt hierbei über deren Gesamtzahl **M,** entsprechend dem Umfang der Feedbackdaten.

Mit anderen Worten werden von der Kontrolleinheit die agronomischen Gütekriterien bevorzugt als Nebenbedingungen in das Kostenfunktional einbezogen.

Der Koeffizient $\lambda_1$ bzw. $\lambda_2$ bildet einen für die Treibstoff- bzw. Betriebskosten zu wählenden Wichtungsfaktor, dessen Wert empirisch vorgegeben ist und innerhalb gegebener Grenzen vom Bediener variiert werden kann. Dies gilt unter anderem für den Fall, dass der Bediener erhöhten Wert auf eine kosten- bzw. treibstoffsparende Durchführung des Bearbeitungsvorgangs legt.

Grundidee für die zu erzielende agronomische Arbeitsqualität, mithin die diese repräsentierenden Gütekriterien ist, dass der Bediener letztere im Rahmen der Arbeitsvorbereitung bzw. -planung auswählt und zusätzlich mittels eines zugehörigen Wichtungsfaktors $q_k$ bewerten kann. Die resultierenden Prozesskosten ergeben sich dann zu

$$l(\epsilon_k(t_q), t_q) = \sum_{q=0}^{N} \sum_{k=0}^{1} q_k[(K_{k1} + K_{k2} \cdot \epsilon_k(t_q) + K_{k3} \cdot \epsilon_k(t_q)^2) \quad,$$

wobei der zum Index **k = 0** gehörige Term eine untere Grenze und der zum Index **k = 1** gehörige Term eine obere Grenze für einen in Bezug auf den k-ten Zustandsparameter $\varepsilon_k$ einzuhaltenden Korridor bildet. Ein derartiger Korridor kann beispielsweise aufgrund eines zulässigen Strohbedeckungsgrads zwischen 0% und 30% oder zwischen 30% und 60% gebildet sein. Der für den Zustandsparameter $\varepsilon_k$ einzuhaltende Korridor resultiert dann in einem u-förmigen Verlauf bzw. Anstieg der Prozesskosten zu den Grenzen des Korridors hin. Bei den Parametern $K_{k1}$, $K_{k2}$, $K_{k3}$ handelt es sich um empirisch ermittelte Werte, die eine Abweichung der Prozesskosten bei Verletzung der für die agronomische Arbeitsqualität vorgegebenen Zielwerte repräsentieren. Diese beeinflussen die Strenge des Anstiegs der Prozesskosten bei Erreichen der Korridorgrenzen. $t_q$ stellt die verstrichene Zeit zum diskreten Zeitpunkt **q** dar.

Die Summe $\sum_{q=0}^{N}$ entspricht dem Gesamtbetrag der Prozesskosten für einen Optimierungshorizont **N,** der üblicherweise zwischen wenigen Millisekunden bis zu 5 Sekunden beträgt. Ist dem Zeitzähler $t_q$ zum Beispiel eine Zeitspanne von 1 Sekunde zugeordnet, so würde für einen Optimierungshorizont von 5 Sekunden **N = 5** gelten.

Zur Veranschaulichung des Kostenfunktionals soll im Folgenden nochmals auf das Beispiel des Strohbedeckungsgrads $\varepsilon_{residue} \in [0,1]$ hinter dem Bodenbearbeitungsgerät Bezug genommen werden,

$$\epsilon_{residue,min} \leq \epsilon(t_q)_{residue} \leq \epsilon_{residue,max} \quad.$$

$\varepsilon_{residue} \in [0,1]$ bedeutet, dass der Strohbedeckungsgrad in einem Intervall zwischen 0% und 100% liegt.

Der Prozesskostenaufwand $l(\varepsilon_{residue}(t_q), t_q)$ bei einer Verletzung der Nebenbedingung für $\varepsilon_{residue}$ ergibt sich dann zu

$$(\epsilon_{residue}(t_q), t_q) = \sum_{q=0}^{N} \sum_{j=0}^{1} q_k[(K_{j1} + K_{j2} \cdot \epsilon_k(t_q) + K_{j3} \cdot \epsilon_k(t_q)^2) =$$

$$\sum_{q=0}^{N} q_{residue}[(K_{low,1} + K_{low,2} \cdot \epsilon_{residue}(t_q) + K_{low,3} \cdot \epsilon_{residue}(t_q)^2) + (K_{high,1} -$$

$$K_{high,2} \cdot \epsilon_{residue}(t_q) - K_{high,3} \cdot \epsilon_{residue}(t_q)^2)] \quad,$$

mit

$$K_{low,1} + K_{low,2} \cdot \epsilon_{residue}(t_q) + K_{low,3} \cdot \epsilon_{residue}(t_q)^2 \geq 0 \ \forall \ \epsilon_{residue}(t) \ \in [0, \epsilon_{residue,c}],$$

$$K_{high,1} - K_{high,2} \cdot \epsilon_{residue}(t_q) - K_{high,3} \cdot \epsilon_{residue}(t_q)^2 \geq 0 \ \forall \ \epsilon_{residue}(t_q) \ \in$$
$$[\epsilon'_{residue,c}, 1] \ ,$$

wobei $\varepsilon_{residue,c}$ bzw. $\varepsilon'_{residue,c}$ jeweils ein fester Wert ist, der durch den Bediener vorgegeben wird. Je nach Situation und Vorlieben des Bedieners entspricht dieser einem Strohbedeckungsgrad von 0% bzw. 30% oder 30% bzw. 60%.

Für die Treibstoffkosten $J_{Kraftstoff}(t_q)$ gilt

$$J_{Kraftstoff}(t_q) = \sum_{q=0}^{N} |\dot{f}_{soll,t_q} - \dot{f}_{ist,t_q}|^2 \ ,$$

wobei die Abweichung des Istwerts $\dot{f}_{ist,t_q}$ von einem im Rahmen der Arbeitsvorbereitung bzw. -planung vorgegebenen Sollwert $\dot{f}_{soll,t_q}$ der zeitlichen Änderung der Treibstoffmenge $f$ berechnet und anschließend von der Kontrolleinheit dokumentiert wird, um diese zu den gesamten Treibstoffkosten für die zu bearbeitende Feldoberfläche aufzuaddieren. Hierbei gilt ein Zusammenhang der Gestalt

$$f = f(\dot{x}(t_q), M_w(t_q), \ddot{x}(t_q), d(t_q), b, t_q) \ ,$$

denn die insgesamt zur Zeit $t_q$ verbrauchte Treibstoffmenge $f$ bzw. deren zeitliche Ableitung $\dot{f}$ lässt sich im Allgemeinen als Funktion einer Arbeitstiefe $d(t_q)$, einer Bearbeitungsgeschwindigkeit $\dot{x}(t_q)$, einer Arbeitsbreite $b$, eines beim Fahren bzw. der Bodenbearbeitung entgegengesetzten Widerstandsmoments $M_w(t_q)$ und einer Fahrtbeschleunigung $\ddot{x}(t_q)$ des landwirtschaftlichen Traktors beschreiben.

In entsprechender Weise gilt für die laufenden Betriebskosten $J_{Betrieb}(t_q)$

$$J_{Betrieb}(t_q) = \sum_{q=0}^{N} |\dot{x}_{soll} - \dot{x}_{ist}|^2 \ ,$$

wobei hier die Abweichung des Istwerts $\dot{x}_{ist}$ von einem im Rahmen der Arbeitsvorbereitung bzw. -planung vorgegebenen Sollwert $\dot{x}_{soll}$ der Bearbeitungsgeschwindigkeit $\dot{x}(t_q)$, mit anderen Worten der dazu äquivalenten Flächenleistung, berechnet und anschließend von der Kontrolleinheit dokumentiert wird, um diese zu den gesamten Betriebskosten für die zu bearbeitende Feldoberfläche 18 aufzuaddieren.

Bei den vom Optimierungsmodul auf Grundlage des Kostenfunktionals abgeleiteten Prozessführungsgrößen handelt es sich im Falle eines als Grubber ausgebildeten Bodenbearbeitungsgeräts um Arbeits- und/oder Betriebsparameter in Gestalt der Arbeitstiefe $d(t_q)$ und der Bearbeitungsgeschwindigkeit $\dot{x}(t_q)$. Diese werden im Stabilisierungsmodul von einem PID-Regler oder einem Riccati-Zustandsregler durch Ansteuerung der Stell- und/oder Betriebseirichtungen des Bodenbearbeitungsgeräts und/oder des landwirtschaftlichen Traktors eingeregelt: Die Bearbeitungsgeschwindigkeit $\dot{x}(t_q)$ wird hierbei durch entsprechende Eingriffe in eine Motorsteuerung des landwirtschaftlichen Traktors angepasst, wohingegen die Arbeitstiefe $d(t_q)$ durch geeignete Veränderung der Hublage eines heckseitigen Dreipunkt-Krafthebers eingestellt wird, an dem das Bodenbearbeitungsgerät am landwirtschaftlichen Traktor angebracht ist.

Der damit korrespondierende Materialfluss ergibt sich dabei aus dem Produkt von Arbeitsbreite $b$, Arbeitstiefe $d(t_q)$ und Bearbeitungsgeschwindigkeit $\dot{x}(t_q)$ zu

$$\dot{m}(t_q) = d(t_q) \cdot b \cdot \dot{x}(t_q)) \ \ .$$

Zur Ableitung der Prozessführungsgrößen wird ein modellprädiktiver Ansatz gewählt, der auf der bereits erwähnten Minimierung des Kostenfunktionals innerhalb des Optimierungshorizonts $t_q = 0,...,N$ beruht. Der modellprädiktiver Ansatz liefert eine bezüglich des Optimierungshorizonts kostenoptimierte Stellgrößentrajektorie der Prozessführungsgrößen, wobei diese für jeden darauffolgenden diskreten Zeitpunkt aktualisiert wird. Die dem aktuellen Zeitpunkt $q$ zugeordnete Stellgrößentrajektorie bildet dann die Grundlage für die Ansteuerung der Stell- und/oder Betriebseirichtungen des Bodenbearbeitungsgeräts und/oder des landwirtschaftlichen Traktors im nachfolgenden Stabilisierungsmodul.

Naturgemäß weisen Arbeits- und/oder Betriebsparameter wie die Arbeitstiefe $d(t_q)$ und die Bearbeitungsgeschwindigkeit $\dot{x}(t_q)$ Beschränkungen auf. Daneben können zusätzliche Beschränkungen bewusst vom Bediener vorgegeben sein. Im Ergebnis führt dies zu entsprechenden Stellgrößenbeschränkungen beim Einregeln der Prozessführungsgrößen.

Ergibt sich eine Stellgrößenbeschränkung insbesondere aufgrund einer bedienerseitig vorgegebenen Begrenzung der Arbeitstiefe $d(t_q)$,

$$d_{min} \leq d(t_q) \leq d_{max} \quad,$$

so kann diese zusätzlich im Kostenfunktional in Gestalt einer weiteren Nebenbedingung mitberücksichtigt werden, wobei sich die Nebenbedingung analog zur Formulierung des zugehörigen Bestrafungsterms $l(\varepsilon_k(t_q),t_q)$ in der Form $l(d(t_g))$ darstellen lässt.

Alternativ kann auch ein weiterer Kostenanteil $J_{delta\ d}(t_q)$ im Kostenfunktional hinzugefügt werden,

$$J_{delta\ d(t_q)} = \sum_{q=0}^{N} \left| d_{soll} - d\left(t_q\right) \right|^2 \quad,$$

wobei $d_{soll}$ einen für die Arbeitstiefe im Rahmen der Arbeitsvorbereitung bzw. -planung vorgegebenen Sollwert darstellt.

Für den Fall, dass eine Einregelung der Prozessführungsgrößen aufgrund von Stellgrößenbeschränkungen nicht möglich ist, ist es denkbar, den Regelbereich von der Kontrolleinheit durch Zuschalten eines zusätzlichen Bodenbearbeitungsgeräts, bevorzugt eines aktiven Bodenbearbeitungsgeräts, funktional zu erweitern.

Beispielhaft sei in diesem Zusammenhang die Kombination eines Bodenbearbeitungsgeräts in Gestalt eines Grubbers mit einem im Frontbereich des landwirtschaftlichen Traktors angebrachten Mulcher erwähnt. Letzterer lässt sich hierbei mittels eines frontseitigen Dreipunkt-Krafthebers in seiner Arbeitshöhe $d_{Mulcher}$ verstellen.

Beim Betrieb des Grubbers ergibt sich eine Stellgrößenbeschränkung vorrangig durch dessen begrenzte nutzbare Arbeitstiefe $d(t_q)$. Tritt insofern eine Stellgrößensättigung ein, kann durch eine Split-Range-Regelung eine künstliche Erweiterung des Stellgrößenbereichs erzielt werden. Erreicht der Grubber seine maximal möglichen Arbeitstiefe $d(t_q) = d_{max}$, so wird der Mulcher zugeschaltet, wobei dessen Arbeitshöhe $d_{Mulcher}$ durch Ansteuerung des frontseitig Dreipunkt-Krafthebers derart eingeregelt wird, dass der durch den Grubber verursachte Effekt der Stellgrößenbeschränkung kompensiert wird.

Zusätzlich besteht die Möglichkeit, dass das Bodenbearbeitungsgerät von der Kontrolleinheit hinsichtlich einer Unterbrechung eines sich aus der Einregelung der Prozessführungsgrößen ergebenden Materialflusses $\dot{m}$ überwacht wird. Im Normalfall wird der gewünschte Materialfluss $\dot{m}$ durch entsprechendes Einregeln der Prozessführungsgrößen sichergestellt. Es gibt jedoch auch Situationen, in denen das Bodenbearbeitungsgerät verstopft, im Falle eines Grubbers beispielsweise aufgrund von übermäßigen Strohansammlungen in den Zinken. Solche Verstopfungen lassen sich durch Überwachung des Materialflusses $\dot{m}$ mittels kamerabasierter Detektormittel vorhersagen.

Einer insofern erkannten bevorstehenden oder bereits eingetretenen Unterbrechung des Materialflusses $\dot{m}$ kann seitens der Kontrolleinheit durch Ansteuerung von Stell- und/oder Betriebseinrichtungen des Bodenbearbeitungsgeräts und/oder des landwirtschaftlichen Traktors entgegengewirkt werden: Die einfachste Vorgehensweise besteht darin, durch Ansteuerung des heckseitigen Dreipunkt-Krafthebers das Bodenbearbeitungsgerät gezielt solange an- und auszuheben, bis sich die Verstopfung von selbst löst. Dies kann bereits vorausschauend erfolgen, sobald die Kontrolleinheit aufgrund der von den kamerabasierten Detektormitteln bereitgestellten Informationen erkennt, dass ein für einen verstopfungsfreien Betrieb einzuhaltender Schwellenwert überschritten wird. Zusätzlich kann ein im Frontbereich des landwirtschaftlichen Traktors angebrachter Mulcher einbezogen werden, um den Materialfluss am Grubber durch zerkleinern der Getreidereste zu verbessern.

Die Überwachung des Materialflusses $\dot{m}$ kann als unterlagerter Regelkreis in das zur Einregelung der Prozessführungsgrößen vorgesehene Stabilisierungsmodul eingehen. So sinkt der Materialfluss $\dot{m}$ ($\dot{m} = b \cdot d(t_q) \cdot \dot{x}(t_q)$) widerstandsbedingt mit anwachsender Materialansammlung $m_{stat}$ im Bodenbearbeitungsgerät. Die zu verändernde Prozessführungsgröße ist im Falle eines Grubbers auch hier die Arbeitstiefe $d(t_q)$. Die Kontrolleinheit verringert die Prozessführungsgröße $d(t_q)$ mit zunehmendem Umfang der Materialansammlung, um einem Verstopfen entgegenzuwirken. Gleichzeitig versucht diese, den gewünschten Materialfluss durch Erhöhung der Arbeitstiefe $d(t_q)$ aufrechtzuerhalten. Hieraus ergeben sich entsprechende Vorgabegrößen $d_{\dot{m}}$ und $d_{mstat}$ für die Regelung des Materialflusses $\dot{m}$. Die sich daraus ergebenden gegensätzlichen Regelvorgänge werden von der Kontrolleinheit dadurch in Einklang gebracht, dass von dieser zur Einregelung der Prozessführungsgröße $d(t_q)$ stets die kleinere der beiden Vorgabegrößen $min[d_{\dot{m}},d_{mstat}]$ herangezogen wird.

Um den Bearbeitungsvorgang nicht weiter zu beeinträchtigen, ist es ferner möglich, dass die Fahrt des landwirtschaftlichen Traktors von der Kontrolleinheit bis zur Behebung der verstopfungsbedingten Unterbrechung ausgesetzt wird. Hierzu kann der landwirtschaftliche Traktor ab einem bestimmten Schwellwert für $m_{stat}$ zum Stehen gebracht werden ($\dot{x}(t_q) = 0$).

Von der Kontrolleinheit kann zudem auf Grundlage des berechneten Kostenfunktionals eine teilflächenspezifische Kostenaufstellung berechnet und über die Nutzerschnittstelle bzw. deren Anzeigeeinheit visualisiert werden. Genauer gesagt können dem Bediener mit Abschluss des Bearbeitungsvorgangs die tatsächlich angefallenen Treibstoffkosten sowie die erzielte Flächenleistung einschließlich möglicher Abweichungen gegenüber der bei der Arbeitsvorbereitung bzw. -planung getroffenen Annahmen angezeigt werden. Die Anzeige der Abweichungen kann zum Zwecke der verbesserten Prozessanalyse teilflächenspezifisch erfolgen.

Zusätzlich kann dem Bediener vor Beginn des eigentlichen Bearbeitungsvorgangs ein Kostenbereich angezeigt werden, in dem die Prozesskosten voraussichtlich liegen werden. Dieser Kostenbereich basiert auf den heuristischen Annahmen hinsichtlich der Vorgabe der teilflächenspezifischen Zielwerte und/oder Wichtungsfaktoren im Interfacemodul sowie zusätzlichen empirischen Faktoren, die eine Abschätzung der Höchst-Prozesskosten betreffen.

Die solchermaßen bereitgestellten Bearbeitungsergebnisse können von der Kontrolleinheit ebenfalls an ein zentrales Farmmanagementsystem übermittelt werden, um eine jederzeit nachvollziehbare Dokumentation des Feldzustands zu ermöglichen.

Das erfindungsgemäße Verfahren zur Automatisierung einer landwirtschaftlichen Arbeitsaufgabe wird im Folgenden anhand der beigefügten Zeichnungen näher erläutert. Hierbei sind übereinstimmende bzw. bezüglich ihrer Funktion vergleichbare Komponenten mit denselben Bezugszeichen gekennzeichnet. Es zeigen:

Fig. 1    ein Ausführungsbeispiel einer Vorrichtung zur Durchführung des erfindungsgemäßen Verfahrens zur Automatisierung einer landwirtschaftlichen Arbeitsaufgabe,

Fig. 2    ein als Flussdiagramm dargestelltes Ausführungsbeispiel des erfindungsgemäßen Verfahrens zur Automatisierung einer landwirtschaftlichen Arbeitsaufgabe, und

Fig. 3    eine Detailansicht eines unterlagerten Regelkreises.

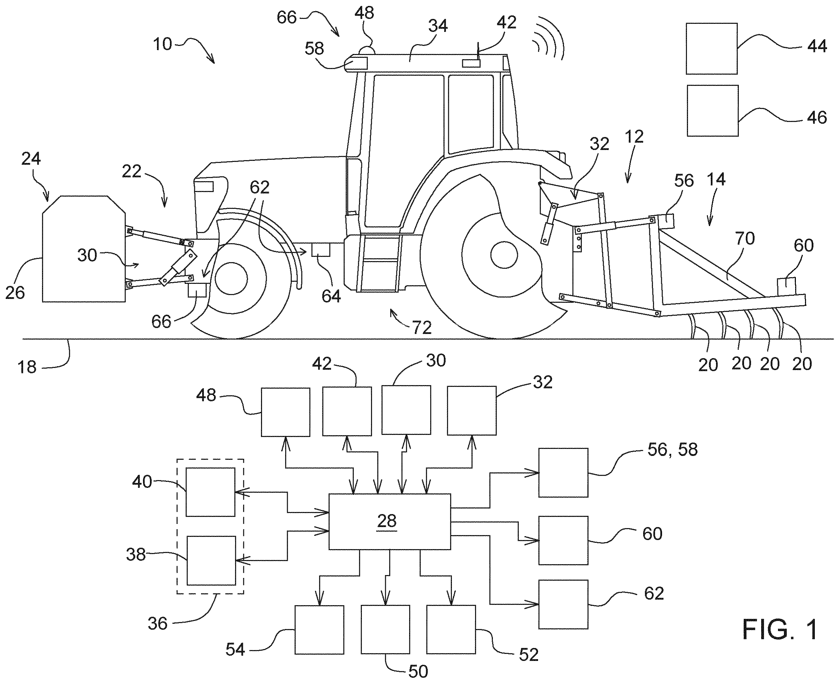

Fig. 1 zeigt eine von einem landwirtschaftlichen Fahrzeug umfasste Vorrichtung zur Durchführung des erfindungsgemäßen Verfahrens zur Automatisierung einer landwirtschaftlichen Arbeitsaufgabe.

Bei dem landwirtschaftlichen Fahrzeug handelt es sich beispielsgemäß um einen landwirtschaftlichen Traktor 10 mit einem heckseitigen Dreipunkt-Kraftheber 12, an dem ein Bodenbearbeitungsgerät 14 zur Grundboden- oder Saatbettbearbeitung, hier in Gestalt eines Grubbers 16 mit einer Vielzahl von in einen Ackerboden bzw. eine Feldoberfläche 18 eingreifenden Zinken 20, angebracht ist. Der Grubber 16 dient einerseits der Lockerung und Krümelung des Ackerbodens sowie andererseits der Einarbeitung von humosem Material, das auf der Feldoberfläche 18 aufliegt. Das humose Material ist typischerweise durch Pflanzenreste eines abgeernteten Getreide- oder Maisfelds gebildet. Für den Fall des in Fig. 1 abgebildeten Getreidefelds handelt es sich dementsprechend um auf der Feldoberfläche 18 liegendes Stroh. Alternativ kann der Grubber 16 jedoch auch zur Bearbeitung eines (mittels eines Feldhäckslers) abgeernteten Maisfelds dienen.

Des Weiteren ist ein frontseitiger Dreipunkt-Kraftheber 22 vorgesehen, an dem ein zusätzliches Bodenbearbeitungsgerät 24 in Gestalt eines Mulchers 26 angebracht ist, mittels dessen sich die auf der Feldoberfläche 18 verteilt liegenden Pflanzenreste bei Bedarf vorzerkleinern lassen, um einen verbesserten Durchsatz (Materialfluss) am Grubber 16 sicherzustellen.

Beide Dreipunkt-Kraftheber 12, 22 lassen sich seitens einer Kontrolleinheit 28 durch Ansteuerung eines jeweils zugehörigen hydraulischen Hubwerks 30, 32 in ihrer Hublage verändern.

Die Kontrolleinheit 28, bei der es sich letztlich um einen Bordcomputer handelt, steht ferner mit einer in einer Fahrerkabine 34 des landwirtschaftlichen Traktors 10 untergebrachten Nutzerschnittstelle 36, die ein Bedienfeld 38 und eine Anzeigeeinheit 40 umfasst, einer Datenschnittstelle 42 zur Herstellung einer drahtlosen Datenaustauschverbindung mit einem zentralen Farmmanagementsystem 44 bzw. einer Datencloud 46, einem GPS-Empfänger 48 zur Positionsbestimmung, einer Motorsteuerung 50, einer Speichereinheit 52, einem CAN- bzw. ISOBUS 54, sowie kamerabasierten Detektormitteln 56 in Verbindung.

Daneben erhält die Kontrolleinheit 28 Informationen bildgebender Sensormittel 58, 60, die die Feldoberfläche 18 vor dem landwirtschaftlichen Traktor 10 (vorausschauende Sensormittel 58) bzw. hinter dem Bodenbearbeitungsgerät 14 (zurückschauende Sensormittel 60) optisch erfassen. Bei den bildgebenden Sensormitteln 58, 60 handelt es sich um eine oder mehrere Mono- und/oder Stereo-Kameras, die im sichtbaren oder IR-Wellenlängenbereich arbeiten. Zur Verbesserung der Datenqualität ist eine Kombination mit weiteren Sensormitteln 62, vorliegend einem Bodenradar (Ground Penetrating Radar) 64 und/oder einem LiDAR 66 vorgesehen.

Die vorausschauenden Sensormittel 58 sind im Dachbereich 68 der Fahrerkabine 34 des landwirtschaftlichen Traktors 10 angebracht, sodass diese einer bei der Bodenbearbeitung verursachten Staubentwicklung in möglichst geringem Maße ausgesetzt sind. Die zurückschauenden Sensormittel 60 hingegen sind dem Bodenbearbeitungsgerät 14 zugeordnet und dort an einer tragenden Gerätestruktur 70 rückwärtig befestigt. Bodenradar 64 und/oder LiDAR 66 befinden sich im Bereich einer Unterseite 72 des landwirtschaftlichen Traktors 10 und sind auf die darunter liegende Feldoberfläche 18 gerichtet.

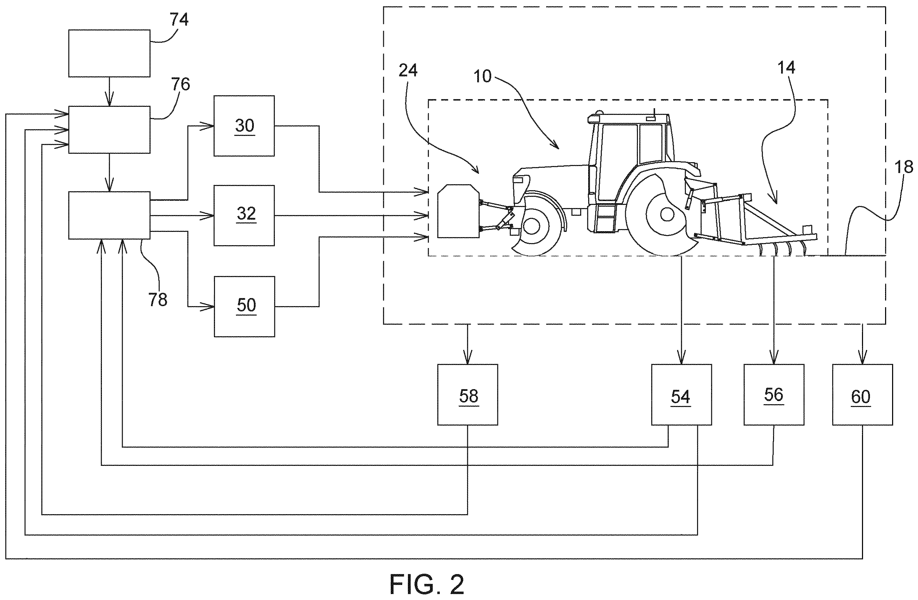

Fig. 2 zeigt ein als Flussdiagramm dargestelltes Ausführungsbeispiel des erfindungsgemäßen Verfahrens zur Automatisierung einer landwirtschaftlichen Arbeitsaufgabe.

Das Verfahren lässt sich grob in drei Module unterteilen, die einen kaskadierten Regelkreis bilden und in der Kontrolleinheit 28 funktionsmäßig als entsprechende Software hinterlegt sind. Im Einzelnen handelt es sich um ein Interfacemodul 74, ein Optimierungsmodul 76 und ein Stabilisierungsmodul 78. Deren Funktion soll nachfolgend im Detail dargelegt werden.

## Interfacemodul

Zunächst werden von der Kontrolleinheit 28 in einem ersten Verfahrensschritt über das Interfacemodul 74 ein oder mehrere teilflächenspezifische Zielwerte und/oder Wichtungsfaktoren hinsichtlich prozessbezogener und/oder agronomischer Gütekriterien vorgegeben, nach deren Maßgabe die Arbeitsaufgabe mittels des Bodenbearbeitungsgeräts 14 auszuführen ist.

Die Vorgabe der teilflächenspezifischen Zielwerte und/oder Wichtungsfaktoren erfolgt hierbei im Rahmen einer Arbeitsvorbereitung bzw. -planung. Die teilflächenspezifischen Zielwerte und/oder Wichtungsfaktoren werden anschließend in die der Kontrolleinheit 28 zugeordnete Speichereinheit 52 bzw. in die Datencloud 46 hochgeladen, sodass diese von dort beim Durchlaufen des Regelkreises vom Interfacemodul 74 abrufbar sind.

Die Durchführung der Arbeitsvorbereitung bzw. -planung erfolgt seitens eines Bedieners über das Bedienfeld 38 der Nutzerschnittstelle 36 bzw. über das zentrale Farmmanagementsystem 44, das insbesondere Zugriff auf eine agronomische Datenbank hat, die unter anderem Informationen hinsichtlich Verlauf, Höhenprofil und Abmessungen der zu bearbeitenden Feldoberfläche 18, Bodeneigenschaften, zurückliegender Bewirtschaftungshistorie, zukünftiger Bewirtschaftungsplanung einschließlich nachfolgend geplanter Bearbeitungsschritte, technischer Spezifikationen des eingesetzten Bodenbearbeitungsgeräts 14 sowie zeitaktueller Angaben äußerer Einflussfaktoren wie der (zurückliegenden, aktuellen oder voraussichtlich zu erwartenden) Wetterverhältnisse und dergleichen enthält. Im Falle kartografisch verorteter Informationen werden diese von der Kontrolleinheit 28 mit seitens des GPS-Empfängers 48 bereitgestellten Positionsdaten in Beziehung gesetzt.

Hierbei betreffen die prozessbezogenen und/oder agronomischen Gütekriterien eine Flächenleistung, Prozesskosten und/oder eine mittels des Bodenbearbeitungsgeräts 14 erzeugbare agronomische Arbeitsqualität. Die Prozesskosten decken den im Hinblick auf die Durchführung der Arbeitsaufgabe insgesamt anfallenden finanziellen Einsatz ab, insbesondere Treibstoff- und laufende Betriebskosten einschließlich der sich aus der Lebensdauer der verwendeten Maschinen ergebenden Investitionskosten, Lohnkosten sowie möglichen Mietkosten jeweils pro zu bearbeitender Flächeneinheit.

Die im Zuge der Arbeitsvorbereitung bzw. -planung über das Interfacemodul 74 initial vorgegebenen teilflächenspezifischen Zielwerte und/oder Wichtungsfaktoren beruhen hierbei auf heuristischen Annahmen in Bezug auf die tatsächlichen Prozesskosten. Die heuristischen Annahmen gehen dabei von den voraussichtlich zu erwartenden Mindest-Prozesskosten aus, wohingegen die Zielwerte der agronomischen Arbeitsqualität bzw. die diese repräsentierenden Qualitätskriterien möglichst realistisch angesetzt werden. Erstere bilden lediglich einen Startpunkt für den nachfolgend im Rahmen des kaskadierten Regelkreises ausgeführten iterativen Selbstoptimierungsprozess.

## Optimierungsmodul

In einem zweiten Verfahrensschritt werden im Optimierungsmodul 76 von der Kontrolleinheit 28 die im Interfacemodul 74 vorgegebenen Zielwerte und/oder Wichtungsfaktoren in Arbeits- und/oder Betriebsparameter des Bodenbearbeitungsgeräts 14 repräsentierende Prozessführungsgrößen umgewandelt.

Zusätzlich werden auf Ebene des Optimierungsmoduls 76 die aus dem Interfacemodul 74 stammenden teilflächenspezifischen Zielwerte und/oder Wichtungen nach Maßgabe feldzustands- und/oder betriebszustandsbezogener Feedbackdaten modifiziert.

Die Beurteilung des durch die Feedbackdaten repräsentierten Zustands der Feldoberfläche 18 vor bzw. nach der Bearbeitung mittels des Bodenbearbeitungsgeräts 14 erfolgt hierbei unter Nutzung der bildgebenden Sensormittel 58, 60.

Die mittels der vorausschauenden Sensormittel 58 bereitgestellten Feedbackdaten betreffen für den Fall eines abgeernteten Getreidefelds Zustandsparameter wie die Stoppeldichte (also die Anzahl der Getreidestoppeln pro Flächeneinheit), die Höhe bzw. Länge der Stoppeln und/oder der Strohreste, Verteilung bzw. Massedichte einer aufliegenden Strohmatte, Unkrautbesatz, den Grad einer Bodenverdichtung und den Verlauf der Stoppelreihen in Bezug auf die Bearbeitungsrichtung. Handelt es sich um ein (mittels eines Feldhäckslers) abgeerntetes Maisfeld, ist auch der Zustand der Stoppeln von Belang, nämlich für den Fall, dass diese während des Erntevorgangs zur Bekämpfung des Maiswurzelbohrers mittels des Feldhäckslers aufgespleisst bzw. plattgefahren worden sind.

Die mittels der zurückschauenden Sensormittel 60 gewonnenen Feedbackdaten beziehen sich für den Fall eines abgeernteten Getreidefelds hingegen auf Zustandsparameter wie den Einarbeitungsgrad der Getreidereste bzw. des verbliebenen Strohbedeckungsgrads, die Krümelung der Feldoberfläche 18, den Tiefenlockerungsgrad oder den Einarbeitungsgrad von Unkraut. Im Falle eines abgeernteten Maisfelds kommen neben dem Einarbeitungsgrad der Maisstoppeln bzw. der Pflanzenüberreste im Allgemeinen Zustandsparameter wie der Zerkleinerungsgrad der Maisstoppeln hinzu.

Des Weiteren ist eine Modifikation der Prozessführungsgrößen in Abhängigkeit eines Betriebszustands des Bodenbearbeitungsgeräts 14 und/oder des landwirtschaftlichen Traktors 10 vorgesehen. Dieser leitet sich aus Informationen eines aktuellen Treibstoffverbrauchs des landwirtschaftlichen Traktors 10, einer sich aus dessen Fahrtgeschwindigkeit ergebenden aktuellen Bearbeitungsgeschwindigkeit $\dot{x}_{ist}$ und/oder einer am zugehörigen Hubwerk 30 bzw. 32 sensorisch erfassten Arbeitstiefe $d_{ist}$ bzw. $d_{Mulcher,ist}$ des Bodenbearbeitungsgeräts 14 bzw. 24 ab. Die betreffenden Informationen stehen der Kontrolleinheit 28 am CAN- bzw. ISOBUS 54 des landwirtschaftlichen Traktors 10 zur Verfügung.

Auch gehen in die Feedbackdaten Informationen hinsichtlich eines aktuellen Funktionsstatus des Bodenbearbeitungsgeräts 14 ein. Der aktuelle Funktionsstatus wird mittels der kamerabasierten Detektormittel 56 am Bodenbearbeitungsgerät 14 bzw. dessen tragender Gerätestruktur 70 überwacht, wobei diese auf Grundlage einer entsprechenden Bildverarbeitung bzw. -analyse erkennen, ob sich Erntereste in den Werkzeugen des Bodenbearbeitungsgeräts 14 (hier den Zinken 20 des Grubbers 16) angesammelt haben und zu möglichen Störungen des Bearbeitungsvorgangs führen können. Bei der Bewertung des aktuellen Funktionsstatus ist eine Berücksichtigung des aktuellen Materialflusses, also des Durchsatzes von Ernteresten und Ackererde pro Zeiteinheit möglich. Weitere Einzelheiten werden im Zusammenhang mit dem nachfolgend beschriebenen Stabilisierungsmodul 78 erläutert.

## Stabilisierungsmodul

In einem dritten Verfahrensschritt werden im Stabilisierungsmodul 78 von der Kontrolleinheit 28 die zuvor gegebenenfalls modifizierten Prozessführungsgrößen durch Ansteuerung von Stell- und/oder Betriebseinrichtungen des Bodenbearbeitungsgeräts 14 und/oder des landwirtschaftlichen Traktors 10 eingeregelt. Die Stell- und/oder Betriebseinrichtungen sind vorliegend durch die beiden Hubwerke 30, 32 sowie die Motorsteuerung 50 gebildet.

Bei den vom Optimierungsmodul 76 auf Grundlage eines Kostenfunktionals abgeleiteten Prozessführungsgrößen handelt es sich im Falle eines als Grubber 16 ausgebildeten Bodenbearbeitungsgeräts 14 um Arbeits- und/oder Betriebsparameter in Gestalt der Arbeitstiefe $d(t_q)$ und der Bearbeitungsgeschwindigkeit $\dot{x}(t_q)$. Diese werden im Stabilisierungsmodul 78 von einem PID-Regler oder einem Riccati-Zustandsregler durch Ansteuerung der Stell- und/oder Betriebseirichtungen 30, 32, 50 des Bodenbearbeitungsgeräts 14 und/oder des landwirtschaftlichen Traktors 10 eingeregelt: Die Bearbeitungsgeschwindigkeit $\dot{x}(t_q)$ wird hierbei durch entsprechende Eingriffe in die Motorsteuerung 50 des landwirtschaftlichen Traktors 10 angepasst, wohingegen die Arbeitstiefe $d(t_q)$ durch geeignete Veränderung der Hublage des heckseitigen Dreipunkt-Krafthebers 12 eingestellt wird, wozu das hydraulische Hubwerk 32 von der Kontrolleinheit 28 entsprechend angesteuert wird.

Der damit korrespondierende Materialfluss ergibt sich dabei aus dem Produkt von Arbeitsbreite $b$, Arbeitstiefe $d(t_q)$ und Bearbeitungsgeschwindigkeit $\dot{x}(t_q)$ zu

$$\dot{m}(t_q) = d\left(t_q\right) \cdot b \cdot \dot{x}\left(t_q\right)) \quad .$$

## Selbstoptimierungsprozess

Zum Zwecke der (Selbst-) Optimierung der erzielbaren Bearbeitungseffizienz und -qualität ist vorgesehen, dass von der Kontrolleinheit 28 zur Modifikation der Prozessführungsgrößen ein Kostenfunktional berechnet und innerhalb vorgegebener Grenzen der agronomischen Gütekriterien minimiert wird.

Bei dem Kostenfunktional handelt es sich um einen Zusammenhang der Gestalt

$$J_{gesamt} = \lambda_1 \cdot J_{Kraftstoff} + \lambda_2 \cdot J_{Betrieb} + \sum_{k=0}^{M} l(\epsilon_k(t_q), t_q)_{Arbeitsqualität} \quad ,$$

wobei die Größe $J_{Kraftstoff}$ die Treibstoffkosten und die Größe $J_{Betrieb}$ die laufenden Betriebskosten wiedergibt. Die beiden Größen $J_{Kraftstoff}$ und $J_{Betrieb}$ ergeben sich dabei initial aus den über das Interfacemodul 74 vorgegebenen teilflächenspezifischen Zielwerten in Bezug auf die Prozesskosten, wobei diese im Rahmen der durchgeführten Selbstoptimierung entsprechend angepasst werden. Der Anteil

$$\sum_{k=0}^{M} l\left(\epsilon_k\left(t_q\right), t_q\right)_{Arbeitsqualität}$$

entspricht dabei einer Ungleichnebenbedingung zur Einhaltung der teilflächenspezifischen Zielwerte für die agronomische Arbeitsqualität bzw. die diese repräsentierenden Gütekriterien. $\varepsilon_k$ repräsentiert hierbei einen mittels der vorausschauenden bzw. zurückschauenden Sensormittel 58, 60 gewonnenen Zustandsparameter und $l(\varepsilon_k(t_q), t_q)$ einen Bestrafungsterm, der die Kosten bei Verletzung einer jeweils einzuhaltenden agronomischen Nebenbedingungen $\varepsilon_{k,min} \leq \varepsilon_k \leq \varepsilon_{k,max}$ modelliert. Die Summation erfolgt hierbei über deren Gesamtzahl $M$, entsprechend dem Umfang der Feedbackdaten.

Mit anderen Worten werden von der Kontrolleinheit 28 die agronomischen Gütekriterien als Nebenbedingungen in das Kostenfunktional einbezogen.

Der Koeffizient $\lambda_1$ bzw. $\lambda_2$ bildet einen für die Treibstoff- bzw. Betriebskosten zu wählenden Wichtungsfaktor, dessen Wert empirisch vorgegeben ist und innerhalb gegebener Grenzen vom Bediener variiert werden kann. Dies gilt unter anderem für den Fall, dass der Bediener erhöhten Wert auf eine kosten- bzw. treibstoffsparende Durchführung des Bearbeitungsvorgangs legt.

Grundidee für die zu erzielende agronomische Arbeitsqualität, mithin die diese repräsentierenden Gütekriterien ist, dass der Bediener letztere im Rahmen der Arbeitsvorbereitung bzw. -planung auswählt und zusätzlich mittels eines zugehörigen Wichtungsfaktors $q_k$ bewerten kann. Die resultierenden Prozesskosten ergeben sich dann zu

$$l\left(\epsilon_k\left(t_q\right), t_q\right) = \sum_{q=0}^{N} \sum_{k=0}^{1} q_k[(K_{k1} + K_{k2} \cdot \epsilon_k\left(t_q\right) + K_{k3} \cdot \epsilon_k\left(t_q\right)^2) \quad,$$

wobei der zum Index $k=0$ gehörige Term eine untere Grenze und der zum Index $k=1$ gehörige Term eine obere Grenze für einen in Bezug auf den k-ten Zustandsparameter $\varepsilon_k$ einzuhaltenden Korridor bildet. Ein derartiger Korridor ist beispielsweise aufgrund eines zulässigen Strohbedeckungsgrads zwischen 0% und 30% oder zwischen 30% und 60% gebildet. Der für den Zustandsparameter $\varepsilon_k$ einzuhaltende Korridor resultiert dann in einem u-förmigen Verlauf bzw. Anstieg der Prozesskosten zu den Grenzen des Korridors hin.

Bei den Parametern $K_{k1}$, $K_{k2}$, $K_{k3}$ handelt es sich um empirisch ermittelte Werte, die eine Abweichung der Prozesskosten bei Verletzung der für die agronomische Arbeitsqualität vorgegebenen Zielwerte repräsentieren. Diese beeinflussen die Strenge des Anstiegs der Prozesskosten bei Erreichen der Korridorgrenzen. $t_q$ stellt die verstrichene Zeit zum diskreten Zeitpunkt $q$ dar.

Die Summe $\sum_{q=0}^{N}$ entspricht dem Gesamtbetrag der Prozesskosten für einen Optimierungshorizont $N$, der üblicherweise zwischen wenigen Millisekunden bis zu 5 Sekunden beträgt. Ist dem Zeitzähler $t_q$ zum Beispiel eine Zeitspanne von 1 Sekunde zugeordnet, so würde für einen Optimierungshorizont von 5 Sekunden $N = 5$ gelten.

Zur Veranschaulichung des Kostenfunktionals wird im Folgenden nochmals auf das Beispiel des Strohbedeckungsgrads $\varepsilon_{residue} \in [0,1]$ hinter dem Bodenbearbeitungsgerät 14 Bezug genommen,

$$\epsilon_{residue,min} \leq \epsilon\left(t_q\right)_{residue} \leq \epsilon_{residue,max} \quad.$$

$\varepsilon_{residue} \in [0,1]$ bedeutet, dass der Strohbedeckungsgrad in einem Intervall zwischen 0% und 100% liegt.

Der Prozesskostenaufwand $l(\varepsilon_{residue}(t_q), t_q)$ bei einer Verletzung der Nebenbedingung für $\varepsilon_{residue}$ ergibt sich dann zu

$$\left(\epsilon_{residue}\left(t_q\right), t_q\right) = \sum_{q=0}^{N} \sum_{j=0}^{1} q_k[(K_{j1} + K_{j2} \cdot \epsilon_k\left(t_q\right) + K_{j3} \cdot \epsilon_k\left(t_q\right)^2) =$$

$$\sum_{q=0}^{N} q_{residue}[(K_{low,1} + K_{low,2} \cdot \epsilon_{residue}\left(t_q\right) + K_{low,3} \cdot \epsilon_{residue}\left(t_q\right)^2) + (K_{high,1} -$$

$$K_{high,2} \cdot \epsilon_{residue}\left(t_q\right) - K_{high,3} \cdot \epsilon_{residue}\left(t_q\right)^2)] \quad,$$

mit

$$K_{low,1} + K_{low,2} \cdot \epsilon_{residue}\left(t_q\right) + K_{low,3} \cdot \epsilon_{residue}\left(t_q\right)^2 \geq 0 \; \forall \, \epsilon_{residue}(t) \; \in [0, \epsilon_{residue,c}],$$

$$K_{high,1} - K_{high,2} \cdot \epsilon_{residue}(t_q) - K_{high,3} \cdot \epsilon_{residue}(t_q)^2 \geq 0 \ \forall \ \epsilon_{residue}(t_q) \ \in$$

$$[\epsilon'_{residue,c}, 1] \ ,$$

wobei $\epsilon_{residue,c}$ bzw. $\epsilon'_{residue,c}$ jeweils ein fester Wert ist, der durch den Bediener vorgegeben wird. Je nach Situation und Vorlieben des Bedieners entspricht dieser einem Strohbedeckungsgrad von 0% bzw. 30% oder 30% bzw. 60%.

Für die Treibstoffkosten $J_{Kraftstoff}(t_q)$ gilt

$$J_{Kraftstoff}(t_q) = \sum_{q=0}^{N} |\dot{f}_{soll,t_q} - \dot{f}_{ist,t_q}|^2 \ ,$$

wobei die Abweichung des Istwerts $\dot{f}_{ist,t_q}$ von einem im Rahmen der Arbeitsvorbereitung bzw. -planung vorgegebenen Sollwert $\dot{f}_{soll,t_q}$ der zeitlichen Änderung der Treibstoffmenge f berechnet und anschließend von der Kontrolleinheit 28 dokumentiert wird, um diese zu den gesamten Treibstoffkosten für die zu bearbeitende Feldoberfläche 18 aufzuaddieren. Hierbei gilt ein Zusammenhang der Gestalt

$$f = f(\dot{x}(t_q), M_w(t_q), \ddot{x}(t_q), d(t_q), b, t_q) \ ,$$

denn die insgesamt zur Zeit $t_q$ verbrauchte Treibstoffmenge $f$ bzw. deren zeitliche Ableitung $\dot{f}$ lässt sich im Allgemeinen als Funktion der Arbeitstiefe $d(t_q)$, der Bearbeitungsgeschwindigkeit $\dot{x}(t_q)$, der Arbeitsbreite $b$, eines beim Fahren bzw. der Bodenbearbeitung entgegengesetzten Widerstandsmoments $M_w(t_q)$ und einer Fahrtbeschleunigung $\ddot{x}(t_q)$ des landwirtschaftlichen Traktors 10 beschreiben.

In entsprechender Weise gilt für die laufenden Betriebskosten $J_{Betrieb}(t_q)$

$$J_{Betrieb}(t_q) = \sum_{q=0}^{N} |\dot{x}_{soll} - \dot{x}_{ist}|^2 \ ,$$

wobei hier die Abweichung des Istwerts $\dot{x}_{ist}$ von einem im Rahmen der Arbeitsvorbereitung bzw. -planung vorgegebenen Sollwert $\dot{x}_{soll}$ der Bearbeitungsgeschwindigkeit $\dot{x}(t_q)$, mit anderen Worten der dazu äquivalenten Flächenleistung, berechnet und anschließend von der Kontrolleinheit 28 dokumentiert wird, um diese zu den gesamten Betriebskosten für die zu bearbeitende Feldoberfläche 18 aufzuaddieren.

Zur Ableitung der Prozessführungsgrößen wird ein modellprädiktiver Ansatz gewählt, der auf der bereits erwähnten Minimierung des Kostenfunktionals innerhalb des Optimierungshorizonts $N$ beruht. Der modellprädiktive Ansatz liefert eine bezüglich des Optimierungshorizonts kostenoptimierte Stellgrößentrajektorie der Prozessführungsgrößen, wobei diese für jeden darauffolgenden diskreten Zeitpunkt aktualisiert wird. Die dem aktuellen Zeitpunkt $q$ zugeordnete Stellgrößentrajektorie bildet dann die Grundlage für die Ansteuerung der Stell- und/oder Betriebseinrichtungen des Bodenbearbeitungsgeräts 14 und/oder des landwirtschaftlichen Traktors 10 im Stabilisierungsmodul 78.

**Split-Range-Regelung**

Naturgemäß weisen Arbeits- und/oder Betriebsparameter wie die Arbeitstiefe $d(t_q)$ und die Bearbeitungsgeschwindigkeit $\dot{x}(t_q)$ Beschränkungen auf. Daneben können zusätzliche Beschränkungen bewusst vom Bediener vorgegeben sein. Im Ergebnis führt dies zu entsprechenden Stellgrößenbeschränkungen beim Einregeln der Prozessführungsgrößen im Stabilisierungsmodul 78.

Ergibt sich eine Stellgrößenbeschränkung insbesondere aufgrund einer bedienerseitig vorgegebenen Begrenzung der Arbeitstiefe $d(t_q)$,

$$d_{min} \leq d(t_q) \leq d_{max} \ ,$$

so wird diese zusätzlich im Kostenfunktional in Gestalt einer weiteren Nebenbedingung mitberücksichtigt, wobei sich die Nebenbedingung analog zur Formulierung des zugehörigen Bestrafungsterms $I(\epsilon_k(t_q), t_q)$ in der Form $I(d(t_q))$ darstellen lässt. Alternativ wird ein weiterer Kostenanteil $J_{delta\,d}(t_q)$ im Kostenfunktional hinzugefügt,

$$J_{delta\,d(t_q)} = \sum_{q=0}^{N} |d_{soll} - d(t_q)|^2 \ ,$$

wobei $d_{soll}$ einen für die Arbeitstiefe $d(t_q)$ im Rahmen der Arbeitsvorbereitung bzw. -planung vorgegebenen Sollwert darstellt.

Für den Fall, dass eine Einregelung der Prozessführungsgrößen aufgrund von Stellgrößenbeschränkungen nicht möglich ist, wird der Regelbereich von der Kontrolleinheit 28 durch Zuschalten des Mulchers 26 funktional erweitert.

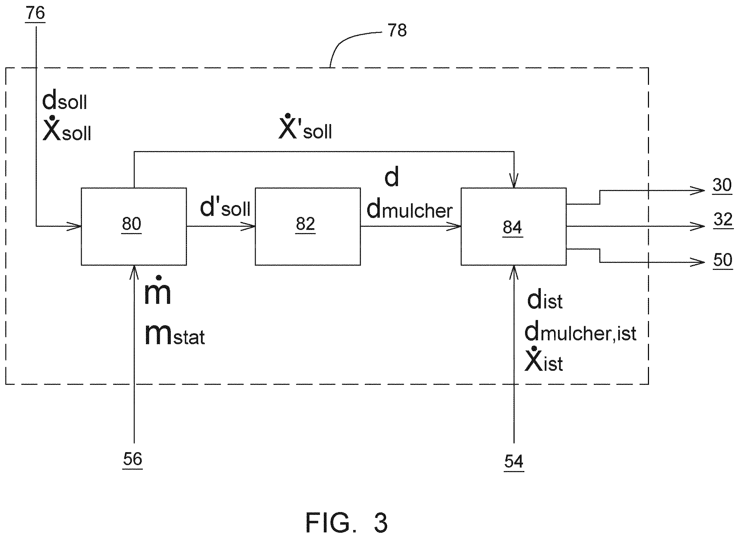

Beim Betrieb des Grubbers 16 ergibt sich eine Stellgrößenbeschränkung vorrangig durch dessen begrenzte nutzbare Arbeitstiefe $d(t_q)$. Tritt insofern eine Stellgrößensättigung ein, wird durch die Split-Range-Regelung eine künstliche Erweiterung des Stellgrößenbereichs erzielt (siehe Modul "Split-Range-Regelung" 82 in Fig. 3). Erreicht der Grubber 16 seine maximal mögliche Arbeitstiefe $d(t_q) = d_{max}$, so wird der Mulcher 26 zugeschaltet, wobei dessen Arbeitshöhe $d_{Mulcher}$ durch Ansteuerung des frontseitigen Dreipunkt-Krafthebers 22 von der Kontrolleinheit 28 derart eingeregelt wird, dass der durch den Grubber 16 verursachte Effekt der Stellgrößenbeschränkung kompensiert wird.

## Betriebsüberwachung

Zusätzlich ist vorgesehen, dass das Bodenbearbeitungsgerät 14, genauer gesagt der Grubber 16 von der Kontrolleinheit 28 hinsichtlich einer Unterbrechung eines sich aus der Einregelung der Prozessführungsgrößen ergebenden Materialflusses $\dot{m}$ überwacht wird. Im Normalfall wird der gewünschte Materialfluss $\dot{m}$ durch entsprechendes Einregeln der Prozessführungsgrößen sichergestellt. Es gibt jedoch auch Situationen, in denen der Grubber 16 verstopft, beispielsweise aufgrund von übermäßigen Strohansammlungen in dessen Zinken 20. Solche Verstopfungen werden von der Kontrolleinheit 28 durch Überwachung des Materialflusses $\dot{m}$ mittels der kamerabasierten Detektormittel 56 vorhergesagt.

Einer insofern erkannten bevorstehenden oder bereits eingetretenen Unterbrechung des Materialflusses $\dot{m}$ wird seitens der Kontrolleinheit 28 durch Ansteuerung der Stell- und/oder Betriebseinrichtungen 30, 32, 50 des Bodenbearbeitungsgeräts 14 und/oder des landwirtschaftlichen Traktors 10 entgegengewirkt: Die einfachste Vorgehensweise besteht darin, durch Ansteuerung des heckseitigen Dreipunkt-Krafthebers 12 bzw. des zugehörigen hydraulischen Hubwerks 32 das Bodenbearbeitungsgerät 14 gezielt solange an- und auszuheben, bis sich die Verstopfung von selbst löst. Dies kann bereits vorausschauend erfolgen, sobald die Kontrolleinheit 28 aufgrund der von den kamerabasierten Detektormitteln 56 bereitgestellten Informationen erkennt, dass ein für einen verstopfungsfreien Betrieb einzuhaltender Schwellenwert überschritten wird. Zusätzlich wird der im Frontbereich des landwirtschaftlichen Traktors 10 angebrachte Mulcher 26 einbezogen, um den Materialfluss $\dot{m}$ am Grubber 16 durch vorzerkleinern der Getreidereste zu verbessern.

Die Überwachung des Materialflusses $\dot{m}$ geht als unterlagerter Regelkreis (siehe Modul "Anti Plug Control" 80 in Fig. 3) in das zur Einregelung der Prozessführungsgrößen vorgesehene Stabilisierungsmodul 78 ein. So sinkt der Materialfluss $\dot{m}$ ($\dot{m} = b \cdot d(t_q) \cdot \dot{x}(t_q)$) widerstandsbedingt mit anwachsender Materialansammlung $m_{stat}$ im Bodenbearbeitungsgerät 14. Die zu verändernde Prozessführungsgröße ist im Falle eines Grubbers 16 auch hier die Arbeitstiefe $d(t_q)$. Die Kontrolleinheit 28 verringert die Prozessführungsgröße $d(t_q)$ mit zunehmendem Umfang der Materialansammlung $m_{stat}$, um einem Verstopfen entgegenzuwirken. Gleichzeitig versucht diese, den gewünschten Materialfluss $\dot{m}$ durch Erhöhung der Arbeitstiefe $d(t_q)$ aufrechtzuerhalten. Hieraus ergeben sich entsprechende Vorgabegrößen $d_{\dot{m}}$ und $d_{mstat}$ für die Regelung des Materialflusses $\dot{m}$. Die sich daraus ergebenden gegensätzlichen Regelvorgänge werden von der Kontrolleinheit 28 dadurch in Einklang gebracht, dass von dieser zur Einregelung der Prozessführungsgröße $d(t_q)$ stets die kleinere der beiden Vorgabegrößen $min[d_{\dot{m}}, d_{mstat}]$ herangezogen wird. Anschließend werden die aufgrund die in den Modulen "Anti-Plug-Control" 80 und "Split-Range-Regelung" 82 verfeinerten Stellgrößentrajektorien, die durch entsprechend angepasste Sollwerte $d'_{soll}$, $\dot{x}'_{soll}$ repräsentiert werden, durch Ansteuerung der Stell- und/oder Betriebseirichtungen 30, 32, 50 des Bodenbearbeitungsgeräts 14 und/oder des landwirtschaftlichen Traktors 10 auf Grundlage der Istwerte $\dot{x}_{ist}$, $d_{ist}$ und $d_{Mulcher,ist}$ eingeregelt (siehe Modul "Zustandsregler" 84 in Fig. 3).

Um den Bearbeitungsvorgang nicht weiter zu beeinträchtigen, wird die Fahrt des landwirtschaftlichen Traktors 10 von der Kontrolleinheit 28 optional bis zur Behebung der verstopfungsbedingten Unterbrechung ausgesetzt. Hierzu wird der landwirtschaftliche Traktor 10 ab einem bestimmten Schwellwert für $m_{stat}$ zum Stehen gebracht ($\dot{x}(t_q) = 0$).

## Anzeige & Dokumentation

Zusätzlich wird von der Kontrolleinheit 28 auf Grundlage des berechneten Kostenfunktionals eine teilflächenspezifische Kostenaufstellung berechnet und über die Nutzerschnittstelle 36 bzw. deren Anzeigeeinheit 40 visualisiert. Genauer gesagt werden dem Bediener mit Abschluss des Bearbeitungsvorgangs die tatsächlich angefallenen Treibstoffkosten sowie die erzielte Flächenleistung einschließlich möglicher Abweichungen gegenüber der bei der Arbeitsvorbereitung bzw. -planung getroffenen Annahmen angezeigt. Die Anzeige der Abweichungen erfolgt zum Zwecke der verbesserten Prozessanalyse teilflächenspezifisch.

Die solchermaßen bereitgestellten Bearbeitungsergebnisse werden von der Kontrolleinheit 28 über die Datenschnittstelle 42 ebenfalls an das zentrale Farmmanagementsystem 44 übermittelt, um eine jederzeit nachvollziehbare Dokumentation des Feldzustands zu ermöglichen.

**Patentansprüche**

1. Verfahren zur Automatisierung einer landwirtschaftlichen Arbeitsaufgabe, die von einem Bodenbearbeitungsgerät (14) an einem landwirtschaftlichen Traktor (10) ausgeführt wird, wobei von einer Kontrolleinheit (28)

   (i) in einem ersten Verfahrensschritt über ein Interfacemodul (74) ein oder mehrere teilflächenspezifische Zielwerte und/oder Wichtungsfaktoren hinsichtlich prozessbezogener und/oder agronomischer Gütekriterien vorgegeben werden, nach deren Maßgabe die Arbeitsaufgabe mittels des Bodenbearbeitungsgeräts (14) auszuführen ist,

   (ii) in einem zweiten Verfahrensschritt in einem Optimierungsmodul (76) die Zielwerte und/oder Wichtungsfaktoren in Arbeits- und/oder Betriebsparameter des Bodenbearbeitungsgeräts (14) repräsentierende Prozessführungsgrößen umgewandelt werden, und

   (iii) in einem dritten Verfahrensschritt in einem Stabilisierungsmodul (78) die Prozessführungsgrößen durch Ansteuerung von Stell- und/oder Betriebseinrichtungen (30, 32, 50) des Bodenbearbeitungsgeräts (14) und/oder des landwirtschaftlichen Traktors (10) eingeregelt werden,

   wobei im zweiten Verfahrensschritt zusätzlich Feedbackdaten hinsichtlich eines Zustands einer Feldoberfläche (18) vor und/oder nach der Bearbeitung mittels des Bodenbearbeitungsgeräts (14) sowie hinsichtlich eines Betriebszustands des Bodenbearbeitungsgeräts (14) und/oder des landwirtschaftlichen Traktors (10) eingehen, um die Prozessführungsgrößen zu modifizieren,
   **dadurch gekennzeichnet, dass** von der Kontrolleinheit (28) zur Modifikation der Prozessführungsgrößen ein Kostenfunktional berechnet und innerhalb vorgegebener Grenzen der agronomischen Gütekriterien minimiert wird.

2. Verfahren nach Anspruch 1, **dadurch gekennzeichnet, dass** die teilflächenspezifischen Zielwerte und/oder Wichtungsfaktoren im Rahmen einer Arbeitsvorbereitung bzw. - planung seitens eines Bedieners über eine in dem landwirtschaftlichen Traktor vorgesehene Nutzerschnittstelle bzw. über ein zentrales Farmmanagementsystem vorgegeben und in eine der Kontrolleinheit (28) zugeordnete Speichereinheit (52) hochgeladen werden.

3. Verfahren nach Anspruch 1 oder 2, **dadurch gekennzeichnet, dass** die prozessbezogenen und/oder agronomischen Gütekriterien eine Flächenleistung, Prozesskosten und/oder eine mittels des Bodenbearbeitungsgeräts (14) erzeugbare, durch Qualitätskriterien repräsentierte agronomische Arbeitsqualität betreffen.

4. Verfahren nach wenigstens einem der Ansprüche 1 bis 3, **dadurch gekennzeichnet, dass** die aus dem Interfacemodul (74) stammenden teilflächenspezifischen Zielwerte und/oder Wichtungen nach Maßgabe der Feedbackdaten modifiziert werden.

5. Verfahren nach wenigstens einem der Ansprüche 1 bis 4, **dadurch gekennzeichnet, dass** in die Feedbackdaten Informationen hinsichtlich eines aktuellen Funktionsstatus des Bodenbearbeitungsgeräts (14) eingehen.

6. Verfahren nach wenigstens einem der Ansprüche 1 bis 5, **dadurch gekennzeichnet, dass** die agronomischen Gütekriterien von der Kontrolleinheit (28) als Nebenbedingungen in das Kostenfunktional einbezogen werden.

7. Verfahren nach wenigstens einem der Ansprüche 1 bis 6, **dadurch gekennzeichnet, dass** für den Fall, dass eine Einregelung der Prozessführungsgrößen aufgrund von Stellgrößenbeschränkungen nicht möglich ist, der Regelbereich von der Kontrolleinheit (28) durch Zuschalten eines zusätzlichen Bodenbearbeitungsgeräts (24) funktional erweitert wird.

8. Verfahren nach wenigstens einem der Ansprüche 1 bis 7, **dadurch gekennzeichnet, dass** das Bodenbearbeitungsgerät (14) von der Kontrolleinheit (28) hinsichtlich einer durch Verstopfen bedingten Unterbrechung eines sich aus der Einregelung der Prozessführungsgrößen ergebenden Materialflusses (m) mittels kamerabasierter Detektormittel (56) überwacht wird.

9. Verfahren nach Anspruch 8, **dadurch gekennzeichnet, dass** einer erkannten bevorstehenden oder bereits eingetretenen Unterbrechung des Materialflusses seitens der Kontrolleinheit (28) durch Ansteuerung von Stell- und/oder Betriebseinrichtungen (30, 32, 50) des Bodenbearbeitungsgeräts (14) und/oder des landwirtschaftlichen Traktors (10) entgegengewirkt wird.

10. Verfahren nach Anspruch 9, **dadurch gekennzeichnet, dass** die Fahrt des landwirtschaftlichen Traktors (10) von der Kontrolleinheit (28) bis zur Behebung der verstopfungsbedingten Unterbrechung ausgesetzt wird.

11. Verfahren nach wenigstens einem der Ansprüche 1 bis 10, **dadurch gekennzeichnet, dass** von der Kontrolleinheit (28) auf Grundlage des berechneten Kostenfunktionals eine teilflächenspezifische Kostenaufstellung berechnet und über eine Nutzerschnittstelle (36) visualisiert wird.

**Claims**

1. Method for automating an agricultural work task, which is executed by a soil cultivation implement (14) on an agricultural tractor (10), wherein, by way of a control unit (28)

   (i) in a first method step, one or more site-specific target values and/or weighting factors with respect to process-related and/or agronomic quality criteria are specified via an interface module (74), according to which the work task is to be executed by means of the soil cultivation implement (14),
   (ii) in a second method step, the target values and/or weighting factors are converted in an optimization module (76) into process control variables representing working and/or operating parameters of the soil cultivation implement (14), and
   (iii) in a third method step, the process control variables are adjusted in a stabilization module (78) by activating positioning and/or operating units (30, 32, 50) of the soil cultivation implement (14) and/or the agricultural tractor (10),

   wherein, in the second method step, feedback data with respect to a status of a field surface (18) before and/or after the cultivation by means of the soil cultivation implement (14) and with respect to an operating status of the soil cultivation implement (14) and/or the agricultural tractor (10) are additionally included in order to modify the process control variables,
   **characterized in that** a cost function is calculated and minimized within predetermined limits of the agronomic quality criteria by the control unit (28) for the modification of the process control variables.

2. Method according to Claim 1, **characterized in that** the site-specific target values and/or weighting factors are specified in the context of work preparation or planning by an operator via a user interface provided in the agricultural tractor or via a central farm management system and are uploaded into a memory unit (52) associated with the control unit (28).

3. Method according to Claim 1 or 2, **characterized in that** the process-related and/or agronomic quality criteria relate to an area performance, process costs, and/or an agronomic work quality producible by means of the soil cultivation implement (14) and represented by quality criteria.

4. Method according to at least one of Claims 1 to 3, **characterized in that** the site-specific target values and/or weightings originating from the interface module (74) are modified according to the feedback data.

5. Method according to at least one of Claims 1 to 4, **characterized in that** items of information with respect to a current functional status of the soil cultivation implement (14) are included in the feedback data.

6. Method according to at least one of Claims 1 to 5, **characterized in that** the agronomic quality criteria are incorporated by the control unit (28) as secondary conditions in the cost function.

7. Method according to at least one of Claims 1 to 6, **characterized in that**, if it is not possible to adjust the process control variables due to manipulated variable restrictions, the control range is functionally expanded by the control unit (28) by switching on an additional soil cultivation implement (24).

8. Method according to at least one of Claims 1 to 7, **characterized in that** the soil cultivation implement (14) is monitored by the control unit (28) by means of camera-based detector means (56) with respect to an interruption, caused by clogging, of a material flow $(\dot{m})$ resulting from the adjustment of the process control variables.

9. Method according to Claim 8, **characterized in that** a recognized imminent or already occurring interruption of the material flow is counteracted on the part of the control unit (28) by activating positioning and/or operating units (30, 32, 50) of the soil cultivation implement (14) and/or the agricultural tractor (10).

**10.** Method according to Claim 9, **characterized in that** the travel of the agricultural tractor (10) is stopped by the control unit (28) until the clog-related interruption is remedied.

**11.** Method according to at least one of Claims 1 to 10, **characterized in that** a site-specific statement of costs is calculated by the control unit (28) on the basis of the calculated cost function and visualized via a user interface (36).

**Revendications**

**1.** Procédé d'automatisation d'une tâche de travail agricole effectuée par un appareil (14) de travail du sol monté sur un tracteur agricole (10), dans lequel, par une unité de commande (28),

(i) dans une première étape du procédé, une ou plusieurs valeurs cibles spécifiques à une partie de surface et/ou des facteurs de pondération relatifs à des critères de qualité liés au processus et/ou agronomiques sont prédéfinis par l'intermédiaire d'un module d'interface (74), en fonction desquels la tâche de travail doit être effectuée au moyen de l'appareil (14) de travail du sol,
(ii) dans une deuxième étape du procédé, les valeurs cibles et/ou les facteurs de pondération sont, dans un module d'optimisation (76), convertis en grandeurs de conduite de processus représentant des paramètres de travail et/ou de fonctionnement de l'appareil (14) de travail du sol, et
(iii) dans une troisième étape du procédé, dans un module de stabilisation (78), les grandeurs de conduite de processus sont déterminées par l'actionnement de dispositifs d'actionnement et/ou de commande (30, 32, 50) de l'appareil (14) de travail du sol et/ou du tracteur agricole (10) ;

dans la deuxième étape du procédé, des données de rétroaction relatives à un état de la surface de champ (18) avant et/ou après le travail au moyen de l'appareil (14) de travail du sol ainsi que relatives à un état de fonctionnement de l'appareil (14) de travail du sol et/ou du tracteur agricole (10) sont en outre incluses pour modifier les grandeurs de conduite du processus,
**caractérisé en ce qu'**une fonction de coût est calculée par l'unité de commande (28) pour modifier les grandeurs de conduite de processus et les minimiser dans des limites prédéfinies des critères de qualité agronomiques.

**2.** Procédé selon la revendication 1, **caractérisé en ce que** les valeurs cibles et/ou facteurs de pondération spécifiques à une partie de surface sont prédéfinis dans le cadre d'une préparation ou d'une planification du travail par un opérateur via une interface utilisateur prévue dans le tracteur agricole ou via un système central de gestion agricole et sont chargés dans une unité de mémoire (52) associée à l'unité de commande (28).

**3.** Procédé selon la revendication 1 ou la revendication 2, **caractérisé en ce que** les critères de qualité liés au processus et/ou agronomiques concernent un rendement surfacique, des coûts de processus et/ou une qualité de travail agronomique apte à être générée au moyen de l'appareil (14) de travail du sol et qui est représentée par des critères de qualité.

**4.** Procédé selon au moins l'une des revendications 1 à 3, **caractérisé en ce que** les valeurs cibles spécifiques à une partie de surface et/ou la pondération provenant du module d'interface (74) sont modifiées en fonction des données de rétroaction.

**5.** Procédé selon au moins l'une des revendications 1 à 4, **caractérisé en ce que** des informations concernant un état de fonctionnement actuel de l'appareil (14) de travail du sol sont incluses dans les données de rétroaction.

**6.** Procédé selon au moins l'une des revendications 1 à 5, **caractérisé en ce que** les critères de qualité agronomiques sont intégrés dans la fonction de coût par l'unité de commande (28) en tant que conditions secondaires.

**7.** Procédé selon au moins une des revendications 1 à 6, **caractérisé en ce que**, dans le cas où un réglage des grandeurs de conduite de processus n'est pas possible en raison de limitations des grandeurs de réglage, la plage de réglage est élargie fonctionnellement par l'unité de commande (28), par l'activation d'un appareil (24) de travail du sol supplémentaire.

**8.** Procédé selon au moins une des revendications 1 à 7, **caractérisé en ce que** l'appareil (14) de travail du sol est surveillé par l'unité de commande (28) en utilisant des moyens de détection (56) à base de caméra en ce qui concerne une interruption, provoquée par un bourrage, d'un flux de matière (m) résultant du réglage des grandeurs de conduite de processus.

9. Procédé selon la revendication 8, **caractérisé en ce qu'**une interruption détectée, imminente ou déjà survenue, du flux de matière est contrecarrée par l'unité de commande (28) en actionnant des dispositifs de réglage et/ou d'actionnement (30, 32, 50) de l'appareil (14) de travail du sol et/ou du tracteur agricole (10).

10. Procédé selon la revendication 9, **caractérisé en ce que** le déplacement du tracteur agricole (10) est suspendu par l'unité de commande (28) jusqu'à ce que l'interruption provoquée par le bourrage soit éliminée.

11. Procédé selon au moins une des revendications 1 à 10, **caractérisé en ce que** l'unité de commande (28) calcule, sur la base de la fonction de coût calculée, un relevé de coût spécifique à une partie de surface et le visualise via une interface utilisateur (36).

FIG. 1

FIG. 2

FIG. 3

EP 3 871 482 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 3243368 A2
- US 2015296701 A1
- US 2019008088 A1